# EUROPEAN PATENT APPLICATION

(11) **EP 1 217 208 A2**
(43) Date of publication of application: **26.06.2002**
(21) Application number: 01600009.3
(22) Date of filing: 02.05.2001
(51) Int. Cl.: F03B 13/18

(54) **Wave operated pump**

(30) Priority: 21.12.2000 GR 2000100453
(71) Applicant: Eleftheriou, Georgios, Salonica (GR)
(72) Inventor: Eleftheriou, Georgios, Salonica (GR)

(57) **Abstract**

It is a seawater pump that can be used to produce electrical power and other output as well as to pump any fluid.

## Description

The invention refers to the construction of a seawater pump.

To date, a pump which uses the rise and fall of the waves as a driving force has never been manufactured..

This pump takes advantage of the movement of the waves to work.

A practical application can be seen in the attached drawings.

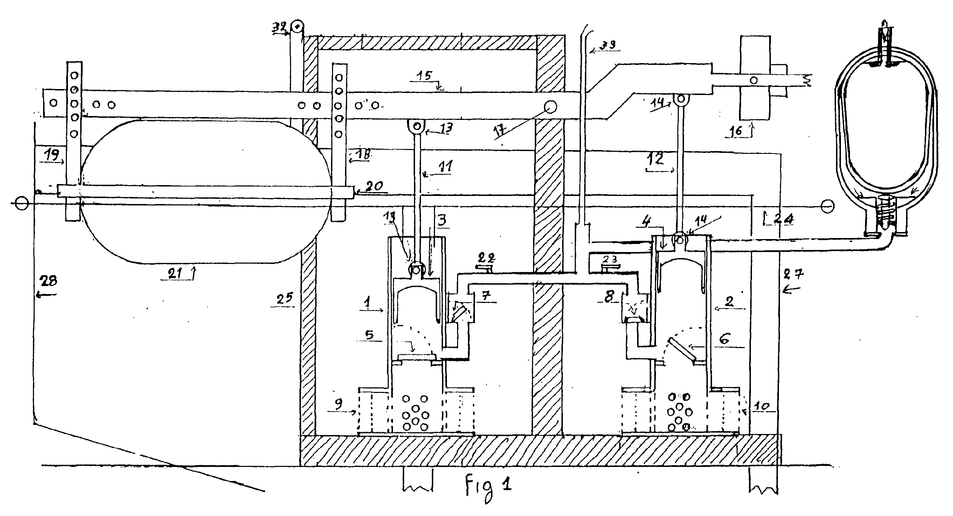

Fig 1 displays a side view of the seawater pump when the water is calm.

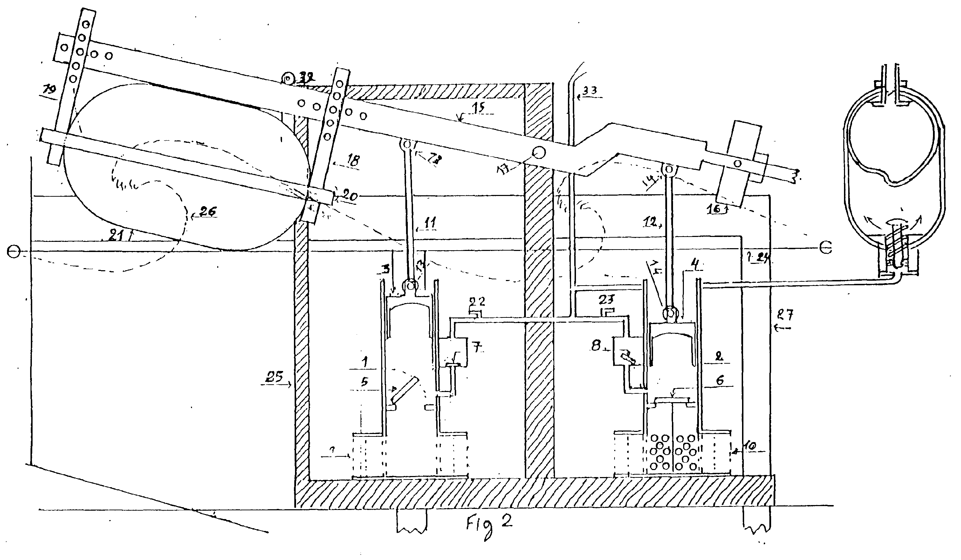

Fig 2 displays a side view of the seawater pump when the wave rises.

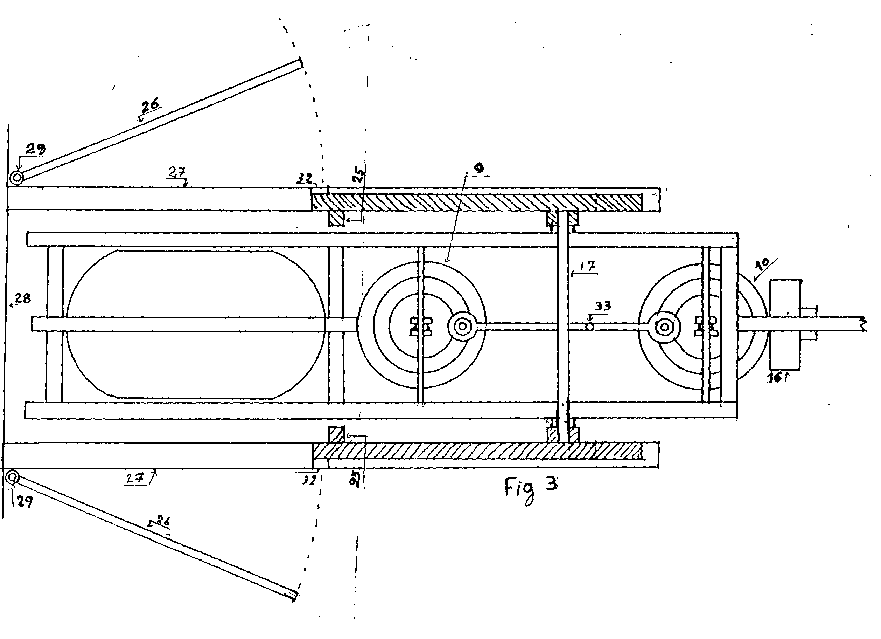

Fig 3 displays an elevational view of the pump.

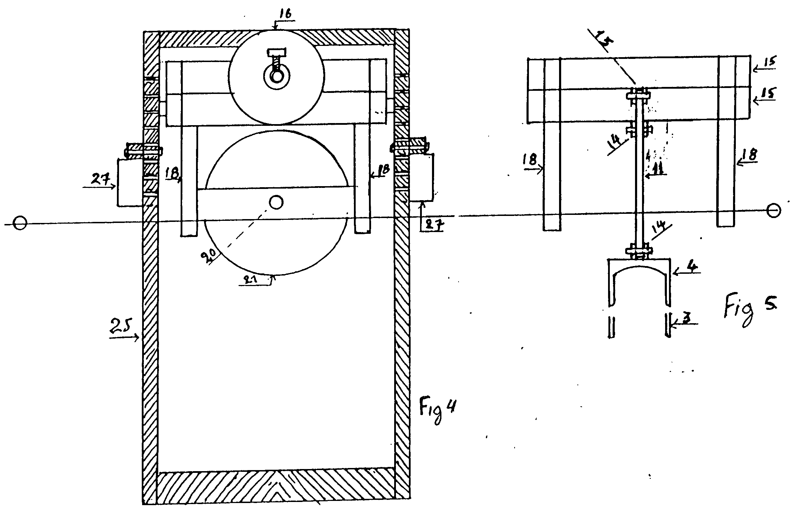

Fig 5 displays a sectional view of the pump plunger.

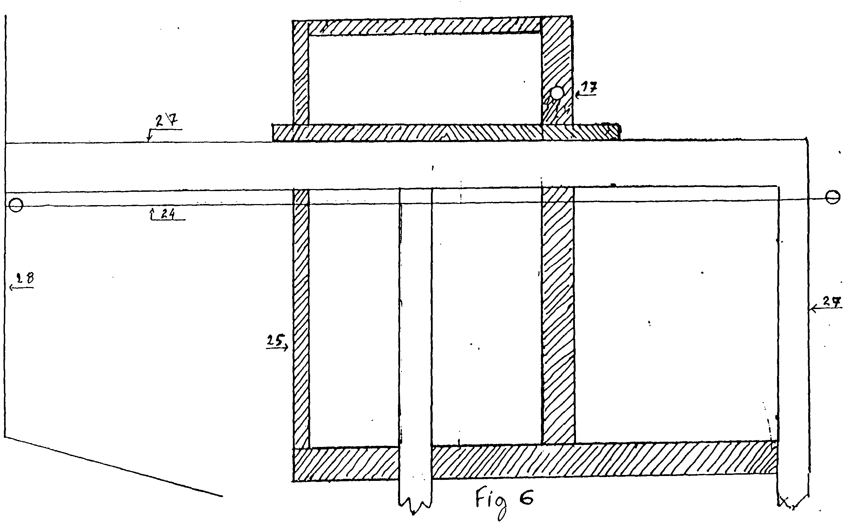

Fig 6 displays a side view of the base of the pump and the ground.

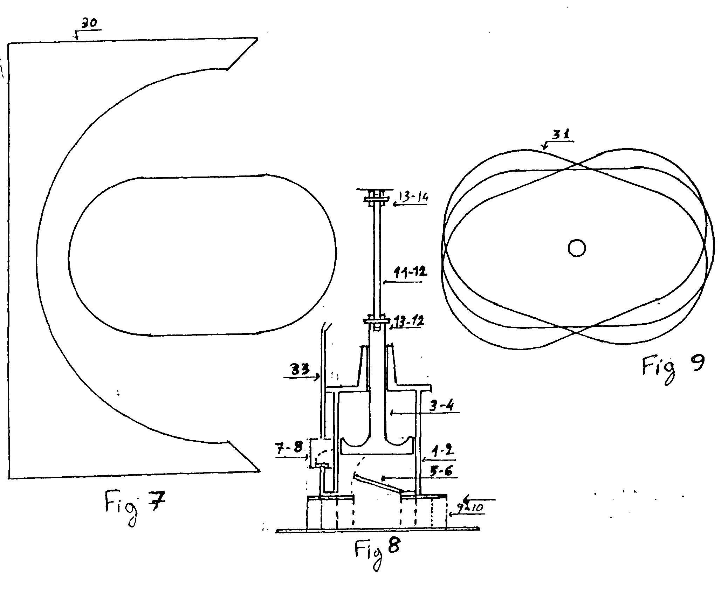

Fig 7 displays an elavational view of the pump roadstead.

Fig 8 displays a sectional view of the pump in different dimensions.

Fig 9 displays the air chamber tilting in different ways.

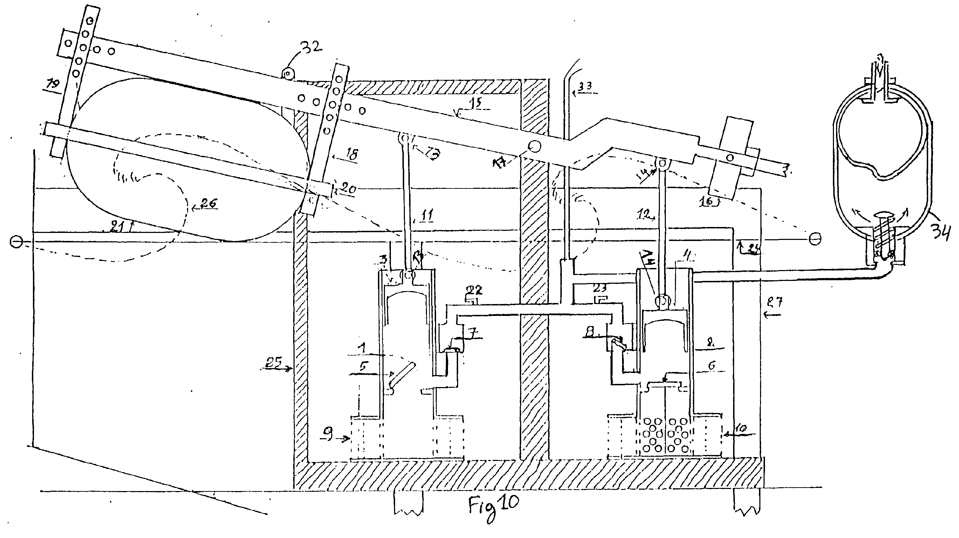

Fig 10 displays the single water pump with the reservoir when it is full of water.

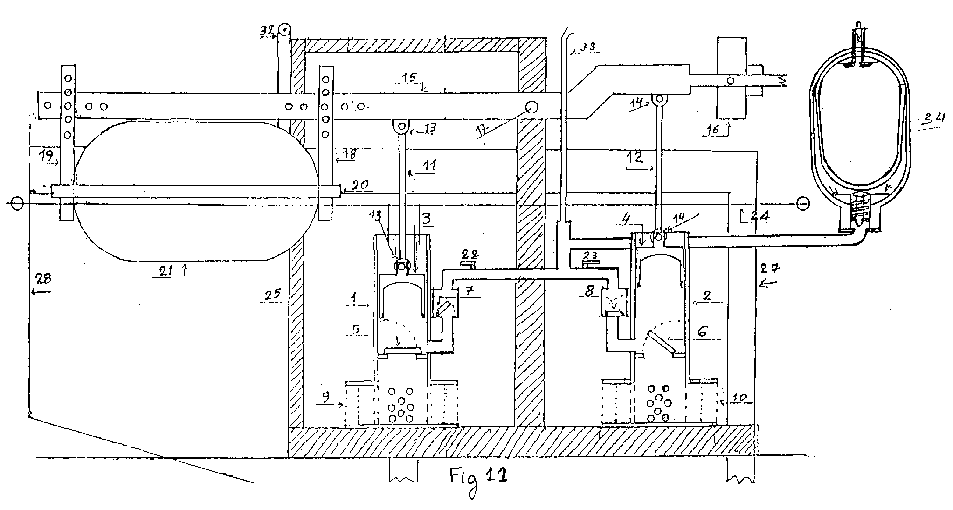

Fig 11 displays the single water pump with the reservoir empty.

In reference to the drawings, the duplex and single seawater pump consists of: The pump base -25-, the palette attached -15- to the pump base by means of the shaft -17-, the palette and plunger connectors -11-12-, the plungers -3-4-, the two cylinders -1-2- where the plungers oscillate, the two breeches -7-8- that prohibit water return, the counterweight -16-, the palette arms -18-19-, the air chamber -21- that is supported by the arms -18-19-, the horizontal line from 0 to 0 that is the sea level -24- and the water switches -22-23- so that the ascending and descending work separately.

The water filters -9-10-, the base -27- attached to a breakwater and underwater pole.

The connectors -13-14-, the air chamber shaft -20-, the sea parapet -28-, the wave -26-. the air chamber -31-, the roadstead -30-, the seawater riser -33-, the break -32-, the wave compressor -29- and the reservoir or reservoir valve -34-,

### FUNCTION

The palette -15- ascends and descends because of the wave movement and thus the plunger -4- drops and the plunger -3- rises. As the plunger -4- drops, the water forces the breeches -6-7- to close and the water is led to the outlet - pipe -33-.

As the plunger -3- rises, the breech -5- is opened and the cylinder chamber is filled with water, which closes the breeches -5-8- and is also led to the outlet - pipe -33-, from where it can be chanelled into a tank and used for power production. (The air chamber can have any desired shape, size and scale).

The water can rise as much as 60% of the air chamber volume, as 40% of it is sunk into the sea.

Supposing the water has risen at 20 metres and allowing for natural loss, we shall use 2-3% of the height so that the water freefalls into the tank.

We can then use a waterfall to drive electrical current generators or anything else we wish.

When the underwater pump base is in place, the pump should protrude about 1 metre above sea level so that it can be sunk more or less into the water and take full advantage of the force of the wave.

The palette should be parallel to the sea level in order to function with the air chamber attached over it.

The palette can also be made longer if needed so that the air chamber can move to and fro and it works as lever.

The pump can also be used with other available driving forces to pump any fluid.

The reservoir or reservoir valve is used with the single pump. When the pump is pushed by the wave it sends the water through the air chamber to the outlet or riser -33-, at the same time putting pressure on the reservoir and storing water in the chamber. As the wave falls, the pressure in the chamber -26- and in the pump drops and immediately the reservoir or reservoir valve forces the water stored within to move towards the outlet -33-. The pipes before the outlet should have at least double the diameter.

## Claims

1. A seawater pump used for the production of electrical power and other kinds of output, **characterised by** the fact that it consists of the pump base-25-, the palette -15- attached to the pump base through the shaft -17-, the palette and plunger connectors -11-12-, the plungers -3-4-. the two cylinders -1-2 - where the plungers oscillate, the two breeches -5-6- prohibiting water return. the other two breeches -7-8- prohibiting water return, the counterweight -16-, the palette arms -18-19-, the horizontal line from 0 to0 that is the sea level -24-, the water switches -22-23- so that the descendant and ascendant work separately, the water filters -9-10-, the base -27- attached to a breakwater and underwater pole, the connectors -13-14-, the air chamber shaft -20-, the parapet -28-, the wave -26-, the air chamber -31-, the roadstead -30-, the seawater riser -33-, the break -32-, the wave compressor -29- and the reservoir or reservoir valve -34-.

2. A pump as in claim 1 **characterised by** the fact that it can be used with other driving forces to pump any fluid.
